# EUROPÄISCHE PATENTSCHRIFT

(11) **EP 3 390 969 B1**
(45) Veröffentlichungstag und Bekanntmachung des Hinweises auf die Patenterteilung: **04.01.2023**
(21) Anmeldenummer: 16822140.6
(22) Anmeldetag: 15.12.2016
(51) Int. Cl.: G01D 5/14, G01D 5/245, H01F 41/16

(54) **GEGENSTAND, VERFAHREN ZUM HERSTELLEN DES GEGENSTANDS UND VERFAHREN ZUM BESTIMMEN EINER POSITION DES GEGENSTANDS**
OBJECT, METHOD FOR PRODUCING THE OBJECT, AND METHOD FOR DETERMINING A POSITION OF THE OBJECT
OBJET, PROCÉDÉ DE FABRICATION D'UN OBJET, ET PROCÉDÉ DE DÉTERMINATION D'UNE POSITION D'UN OBJET

(30) Priorität: 15.12.2015 DE 102015121812
(43) Veröffentlichungstag der Anmeldung: 24.10.2018
(73) Patentinhaber: Bogen Magnetics GmbH, 14163 Berlin (DE)
(72) Erfinder: BECKER, Torsten, 14109 Berlin (DE)
(74) Vertreter: PATERIS Patentanwälte PartmbB
(86) Internationale Anmeldenummer: PCT/EP2016/081222
(87) Internationale Veröffentlichungsnummer: WO 2017/102963

(56) Entgegenhaltungen:
- EP-A1- 0 557 149
- DE-A1- 10 038 296
- DE-T2- 69 838 830
- DE-T2-602004 013 155
- GB-A- 878 056
- US-A- 4 094 804
- US-A- 5 720 012
- US-A1- 2007 060 820
- US-A1- 2012 225 264
- US-A1- 2014 063 100
- US-A1- 2014 306 099

## Beschreibung

Die Erfindung betrifft einen Gegenstand, ein Verfahren zum Herstellen des Gegenstands und ein Verfahren zum Bestimmen einer Position des Gegenstands.

Im Werkzeugmaschinenbau ist es bekannt beispielsweise einen magnetischen Linearmaßstab zur Bestimmung einer Position eines Werkzeugschlittens zu verwenden. Die Positionen können mit einer Relativmessung oder einer Absolutmessung bestimmt werden. Für die relative Positionsbestimmung wird ein sich wiederholendes Bitmuster abwechselnder gleichbreiter Nord- und Südpole vermessen. Da das sich wiederholende Bitmuster nicht unterscheidbar ist, sind Positionen nur relativ unterscheidbar und die Position wird in der Regel durch Zählen der passierten Bits erzeugt. Für die absolute Positionsbestimmung wird entweder das Bitmuster durch eine zweite Spur indiziert, durch das Phasenverhältnis zwischen den Spuren oder es wird ein unterscheidbares Bitmuster verwendet. Im ersten Fall werden durch die zweite Spur die einzelnen Bits indiziert und somit unterscheidbar gemacht. Im zweiten Fall werden typischerweise eine um 1 unterschiedliche Bitmuster in den beiden Spuren verwendet. Im dritten Fall werden beispielhaft unterscheidbare Bitmuster verwendet, bei denen die einzelnen Maßstabsinkremente unterschiedlich breit sind, beispielsweise von einem absoluten Startpunkt aus sich vergrößern. Bei Anwesenheit eines starken Magnetfeldes ist es jedoch möglich, dass jedes zweite Bit ummagnetisiert wird. Dadurch haben alle Bits die gleiche Polarität, so dass die Position nicht mehr bestimmbar ist.

Die EP 0 557 149 A1 offenbart eine Schieblehre. Die DE 60 2004 013 155 T2 beschreibt ein Verfahren und Mittel zur Herstellung eines magnetisch hervorgerufenen Musters in einer Beschichtung mit magnetischen Partikeln. Ferner stellt die US 2014 / 0 306 099 A1 eine optische Skala dar. Die US 4 094 804 A offenbart ein wasserbasiertes magnetisches Fluid. Die DE 698 38 830 T2 beschreibt ein Verfahren zur Reduzierung der Teilchengröße.

Außerdem stellt die US 2007 / 0 060 820 A1 im Rahmen eines Systems zur Messung des vaskulären Widerstands magnetische Sektionen dar. Die WO 2015/032600 A1 offenbart eine Messvorrichtung und ein Verfahren zum Messen der Position von Körpern. Die US 3 458 688 A offenbart eine Identifizierung von Zeilenpositionen in Dokumenten.

Die DE 100 38 296 A1 beschreibt eine absolut messende Winkelmesseinrichtung und aus ihr ist ein Winkelmessverfahren für eine derartige Einrichtung bekannt.

Aus der US 5 720 012 A ist ein Sicherheitsmodul für ein Druckgerät bekannt.

Aus der US 2012 / 225264 A1 sind ein Wafer, ein Verfahren zum Herstellen eines Gehäuses und ein piezoelektrischer Oszillator bekannt.

Aus der US 2014 / 063100 A1 sind ein Verfahren und eine Vorrichtung zur Reduzierung von sich absetzenden magnetischen Partikeln in magnetischer Tinte bekannt.

Aus der GB 878 056 A sind Verbesserungen betreffend Rechenschieber bekannt.

Aufgabe der Erfindung ist es daher, einen Gegenstand, ein Verfahren zum Herstellen des Gegenstands und ein Verfahren zum Bestimmen einer Position des Gegenstands zu schaffen, wobei die Position des Gegenstands auch in Anwesenheit starker Magnetfelder fehlerfrei ausgelesen werden kann.

Der erfindungsgemäße Gegenstand weist ein Substrat und eine mit einem magnetisierbare und/oder magnetische Partikel aufweisenden Druckmittel auf das Substrat aufgebrachte Skala auf, die das Druckmittel aufweisende Bereiche und von dem Druckmittel freie Bereiche, die zwischen den das Druckmittel aufweisenden Bereichen angeordnet sind, aufweist und eingerichtet ist, mittels der das Druckmittel aufweisenden Bereiche und der von dem Druckmittel freien Bereiche Positionen zu kennzeichnen, wobei die magnetischen Eigenschaften des Substrats derart sind, dass bei einem Anlegen eines äußeren Magnetfelds an den Gegenstand oder beim Auslesen des magnetischen Feldes der magnetischen Partikel von dem Druckmittel ein stärkeres Magnetfeld als von dem Substrat erzeugt wird, wobei die Skala eine Mehrzahl an Skalenstrichen aufweist, die unterschiedlich lang sind, wobei an vorbestimmten Positionen der Skala Skalenstriche mit einer vorbestimmten Länge zusammen mit einer Beschriftung jeweils Absolutpositionen der Skala definieren und an anderen vorbestimmten Positionen Skalenstriche mit einer anderen vorbestimmten Länge jeweils Relativpositionen zwischen den Absolutpositionen definieren.

Das erfindungsgemäße Verfahren zum Herstellen des Gegenstands weist die Schritte auf: Bereitstellen eines Substrats; Aufbringen einer Skala mit einem magnetisierbare und/oder magnetische Partikel aufweisenden Druckmittel auf das Substrat, wodurch der Gegenstand fertig gestellt wird, wobei die Skala das Druckmittel aufweisende Bereiche und von dem Druckmittel freie Bereiche, die zumindest teilweise zwischen den das Druckmittel aufweisenden Bereichen angeordnet sind, aufweist und eingerichtet ist, mittels der das Druckmittel aufweisenden Bereiche und der von dem Druckmittel freien Bereiche Positionen zu kennzeichnen und die magnetischen Eigenschaften des Substrats derart sind, dass bei einem Anlegen eines äußeren Magnetfelds an den Gegenstand oder beim Auslesen des magnetischen Feldes der magnetischen Partikel von dem Druckmittel ein stärkeres Magnetfeld als von dem Substrat erzeugt wird, wobei die Skala eine Mehrzahl an Skalenstrichen aufweist, die unterschiedlich lang sind, wobei an vorbestimmten Positionen der Skala Skalenstriche mit einer vorbestimmten Länge zusammen mit einer Beschriftung jeweils Absolutpositionen der Skala definieren und an anderen vorbestimmten Positionen Skalenstriche mit einer anderen vorbestimmten Länge jeweils Relativpositionen zwischen den Absolutpositionen definieren.

Das erfindungsgemäße Verfahren zum Bestimmen einer Position des Gegenstands weist die Schritte auf: Detektieren, ob ein von einer im Bereich der Skala angeordneten Messstelle des Gegenstands ausgehendes Magnetfeld vorhanden ist; Rückschließen von dem detektierten oder nicht detektierten von der Messstelle ausgehenden Magnetfeld und/oder von der Form des von der Messstelle ausgehenden Magnetfeldes auf die Position des Gegenstands.

Durch den erfindungsgemäßen Gegenstand, das erfindungsgemäße Verfahren zum Herstellen des Gegenstands und das erfindungsgemäße Verfahren zum Bestimmen der Position des Gegenstands wird vorteilhaft erreicht, dass selbst bei Anwesenheit störender starker Magnetfelder die Position des Gegenstands fehlerfrei ausgelesen werden kann. Zudem können mit dem Druckmittel kleinere Strukturen als mit einem herkömmlichen Bitmuster hergestellt werden. Damit kann die Position des erfindungsgemäßen Gegenstands mit einer höheren Genauigkeit als mit dem herkömmlichen Bitmuster bestimmt werden. Zudem ist der Gegenstand kostengünstiger herstellbar als das herkömmliche Bitmuster. Indem unterschiedlich lange Skalenstriche verwendet werden, kann durch Identifizieren der Länge auch eine absolute Bestimmung der Position erfolgen.

Es ist bevorzugt, dass die magnetischen Eigenschaften des Substrats derart sind, dass das Substrat im Wesentlichen nicht magnetisch und im Wesentlichen nicht magnetisierbar ist. Dadurch sind beim Übergang von den das Druckmittel aufweisenden Bereichen zu den von dem Druckmittel freien Bereichen besonders große Gradienten des Magnetfeldes realisierbar. Durch die großen Gradienten des Magnetfeldes sind die das Druckmittel aufweisenden Bereiche und deren Position besonders fehlerfrei und mit einer hohen Genauigkeit bestimmbar. Damit ist auch die Position des Gegenstands mit der hohen Genauigkeit bestimmbar.

Die Skala weist bevorzugt eine Mehrzahl an Skalenstrichen und/oder eine Mehrzahl an Zeichen auf, insbesondere Buchstaben und/oder Ziffern. Durch die Verwendung von Skalenstrichen lässt sich die Position des Gegenstands relativ bestimmen, indem bei dem Verfahren zum Bestimmen der Position die Skalenstriche gezählt werden. Durch die Verwendung der Zeichen kann eine absolute Bestimmung der Position des Gegenstands erfolgen. Auch kann durch den Einsatz mehrerer Spuren von Skalenstrichen eine absolute Bestimmung der Position erfolgen.

Es ist bevorzugt, dass mindestens einer der Skalenstriche mit einer mit dem Druckmittel auf das Substrat aufgebrachten Beschriftung markiert ist. Dadurch lässt sich die Absolutposition zumindest des markierten Skalenstrichs bestimmen.

Es ist bevorzugt, dass die Skala linear, quadratisch oder logarithmisch geteilt ist oder dass die Skala von einem Muster aus mit dem Druckmittel auf das Substrat aufgebrachten Markierungsstreifen gebildet ist, die von Markierungsstreifen zu Markierungsstreifen zwischen einer ersten Position der Skala und einer in die Längsrichtung der Skala im Abstand zur ersten Position angeordneten zweiten Position jeweils derart vorherbestimmt zur Transversalrichtung der Skala in einem jeweiligen Neigungswinkel geneigt angeordnet sind, dass jeder der Neigungswinkel einen Wert hat, der sich von den Werten der anderen Neigungswinkeln unterscheidet. Damit die Skala die Positionen kennzeichnen kann, ist die Skala regelmäßig geteilt. Mittels einem Barcode oder einem QR-Code können beispielsweise die Positionen aufgrund ihrer unregelmäßigen Struktur nicht gekennzeichnet werden. Durch die unterschiedlichen Neigungswinkel lässt sich durch Bestimmen des Neigungswinkels vorteilhaft einfach die Absolutposition des Gegenstands bestimmen.

Die Skalenstriche haben bevorzugt eine Breite von 1 µm bis 1 mm, insbesondere von 10 µm bis 100 µm, insbesondere von 1 µm bis 10 µm. Die Position des Gegenstands kann mit einer höheren Genauigkeit hergestellt werden, je kürzer die Breite des Skalenstrichs ausgeführt ist. Dabei können die Skalenstriche mit den angegebenen Breiten mit dem Druckmittel ohne Weiteres hergestellt werden.

Es ist bevorzugt, dass das Druckmittel Pigmente, die insbesondere die magnetisierbaren und/oder magnetischen Partikel aufweisen, und/oder einen Farbstoff aufweist. Damit ist vorteilhaft erreicht, dass die Skala nicht nur magnetisch, sondern auch optisch ausgelesen werden kann. Aus Kostengründen ist es besonders vorteilhaft, wenn die Pigmente die magnetisierbaren und/oder magnetischen Partikel aufweisen, weil es nicht erforderlich ist, zu dem Farbstoff und/oder den Pigmenten zusätzlich noch die magnetisierbaren Partikel bereitzustellen.

Das Druckmittel weist bevorzugt einen Füllgrad von 30 Vol-% bis 90 Vol-%, insbesondere von 40 Vol-% bis 70 Vol-%, an den magnetisierbaren und/oder magnetischen Partikeln auf. Das Druckmittel weist im Übrigen im Wesentlichen ein Bindemittel auf, wobei auch zusätzlich ein Lösungsmittel vorgesehen sein kann. Das Bindemittel sorgt für eine Haftung des Druckmittels an dem Gegenstand. Das Lösungsmittel kann vorgesehen werden, um den Farbstoff zu lösen. Durch den Anteil von 30 Vol-% bis 90 Vol-% an magnetisierbaren und/oder magnetischen Partikeln ist vorteilhaft eine starke Magnetisierbarkeit des Musters bei gleichzeitig einer starken Haftung erreicht. Besonders bevorzugt ist hierbei ein Füllgrad von ungefähr 50 Vol-%.

Es ist bevorzugt, dass die magnetisierbaren Partikel Pigmente, keramische Partikel und/oder Seltenerdmetalle aufweisen, die magnetischen Partikel hartmagnetische Partikel, Pigmente, Mikromagneten, keramische Partikel und/oder Seltenerdmetalle aufweisen. Hartmagnetische Partikel sind vorteilhaft, weil sie hohe magnetische Feldstärken aufweisen. Pigmente sind vorteilhaft, weil sie sowohl als Magnet als auch als Farbstoff fungieren. Keramische Metalle sind aufgrund ihrer chemischen Resistenz vorteilhaft. Seltenerdenmetalle weisen hohe magnetische Feldstärken auf.

Ein Mittelwert einer Verteilung von Größen der magnetisierbaren und/oder magnetischen Partikel ist bevorzugt kleiner als 2 µm. Sind die magnetisierbaren Partikel beispielsweise kugelförmig, so bezeichnet die Größe den Partikeldurchmesser. Weicht die Form der magnetisierbaren Partikel von der Kugelform ab, so ist die Größe die längste in dem magnetisierbaren Partikel vorkommende Abmessung. Aufgrund der kleinen Größe der Partikel lassen sich die magnetisierbaren und/oder magnetischen Partikel, insbesondere wenn es sich um hartmagnetische Partikel handelt, die bereits magnetisiert vorliegen, bei dem Verfahren zum Bestimmen der Position des Gegenstands in einem äußeren Magnetfeld besonders leicht ausrichten und somit lässt sich eine besonders starke Magnetisierung der das Druckmittel aufweisenden Bereiche erreichen.

Es ist bevorzugt, dass das Druckmittels derart geformt ist, dass das Druckmittel in seinem mittleren Bereich eingedellt ist, so dass das Druckmittel an seinen Randbereichen sich erhebt. Dadurch hat bei einem Übergang von den das Druckmittel aufweisenden Bereichen zu den von dem Druckmittel freien Bereichen bei einem Anlegen eines äußeren Magnetfelds an den Gegenstand das von dem Druckmittel ausgehende Magnetfeld einen starken Gradienten. Durch den starken Gradienten kann die Position besonders genau bestimmt werden.

Es ist bevorzugt, dass das Druckmittel mittels Drucken auf das Substrat aufgebracht wird. Dabei sind beispielsweise ein Offsetdruck, ein Laserdruck und/oder ein Tintenstrahldruck denkbar.

Es ist bevorzugt, dass das Verfahren zum Herstellen des Gegenstands den Schritt aufweist: Magnetisieren der Skala während und/oder nach ihrem Aufbringen. Dabei ist besonders bevorzugt, dass das Magnetisieren der Skala vor einem Aushärten eines Bindemittels des Druckmittels erfolgt. Dies eignet sich besonders für hartmagnetische Partikel, die bereits im magnetisierten Zustand in dem Druckmittel vorliegen. Die Orientierung, die die Partikel durch das Magnetisieren erfahren, wird durch das Aushärten des Bindemittels eingefroren.

Um eine Agglomeration der magnetisierbaren und/oder magnetischen Partikel vor dem Aufbringen der Skala zu unterbinden, kann das Druckmittel gerührt werden und/oder es kann ein Sieb in einem Fluss des Druckmittels vorgesehen werden, dessen Maschen derart dimensioniert sind, dass einzelne magnetisierbare und/oder magnetische Partikel das Sieb penetrieren können, Agglomerate der Partikel hingegen von dem Sieb zurückgehalten werden.

Bevorzugtermaßen weist das Verfahren zum Herstellen des Gegenstands den Schritt auf: Formen des Druckmittels bei dessen Aufbringen und/oder nach dessen Aufbringen auf das Substrat derart, dass das Druckmittel in seinem mittleren Bereich eingedellt wird, so dass das Druckmittel an seinen Randbereichen sich erhebt, wodurch bei einem Übergang von den das Druckmittel aufweisenden Bereichen zu den von dem Druckmittel freien Bereichen bei einem Anlegen eines äußeren Magnetfelds an den Gegenstand das von dem Druckmittel ausgehende Magnetfeld einen stärkeren Gradienten als vor dem Formen hat. Somit lässt sich vorteilhaft die Genauigkeit beim Bestimmen der Position des Gegenstands erhöhen.

Bevorzugt weist das Verfahren zum Bestimmen einer Position des Gegenstands den Schritt auf: - Anlegen eines äußeren Magnetfelds an die Messstelle derart, dass die Skala magnetisierbar ist.

Es ist bevorzugt, dass das von der Messstelle ausgehende Magnetfeld unter Heranziehen des induktiven Effektes und/oder des magnetoresistiven Effekts detektiert wird, insbesondere des anisotropen magnetoresistiven Effekts, des Riesenmagnetowiderstand Effekts, des magnetischen Tunnelwiderstand Effekts und/oder des Hall-Effekts. Dabei lassen sich unter Heranziehen des Riesenmagnetowiderstand Effekts und des magnetischen Tunnelwiderstand Effekts besonders kleine das Druckmittel aufweisende Bereich auslesen, wodurch die Genauigkeit beim Bestimmen der Position besonders hoch ist.

Im Folgenden werden Ausführungsformen anhand der beigefügten schematischen Zeichnungen erläutert. Es zeigen:
Figur 1 einen Gegenstand mit einer Skala mit gleich langen Skalenstrichen,
Figur 2 einen Gegenstand mit einer Skala mit Ziffern,
Figur 3 eine erfindungsgemäße Ausführungsform des Gegenstands mit einer Skala mit unterschiedlich langen Skalenstrichen und
Figur 4 eine Ausführungsform des Gegenstands mit einer Skala mit Markierungsstreifen mit unterschiedlichen Neigungswinkeln.

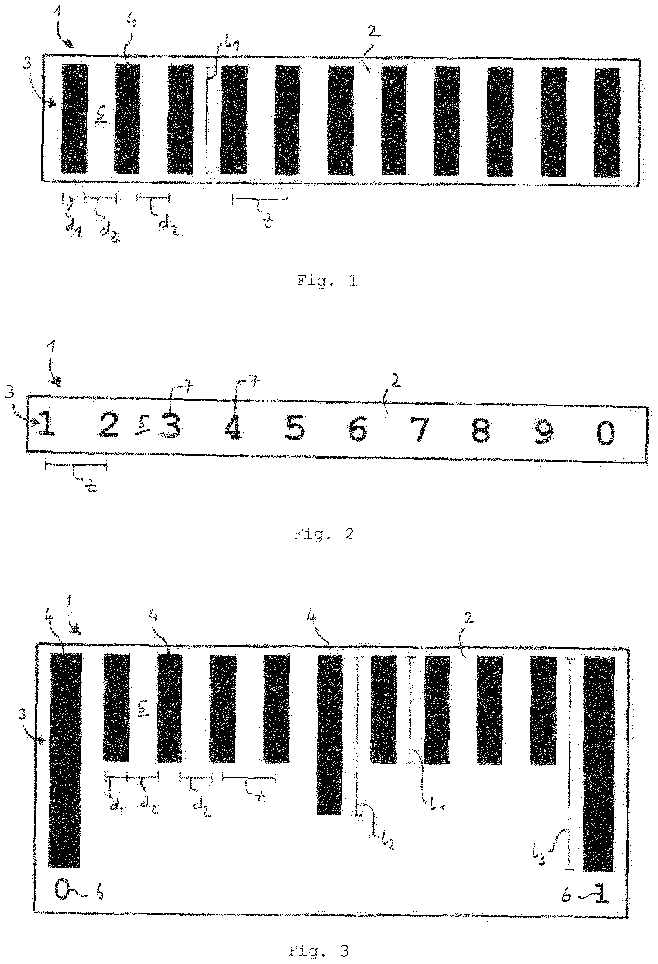

Wie es aus Figuren 1 bis 4 ersichtlich ist, weist ein Gegenstand 1 ein Substrat 2 und eine Skala 3 auf. Die Skala 3 ist mit einem magnetisierbare und/oder magnetische Partikel aufweisenden Druckmittel auf das Substrat 2 aufgebracht. Die Skala 3 weist das Druckmittel aufweisende Bereiche und von dem Druckmittel freie Bereiche 5 auf und ist eingerichtet, mittels der das Druckmittel aufweisenden Bereiche und der von dem Druckmittel freien Bereiche 5 eine Mehrzahl an Positionen anzuzeigen. Die magnetischen Eigenschaften des Substrats 2 sind derart, dass bei einem Anlegen eines äußeren Magnetfelds an den Gegenstand 1 oder beim Auslesen des magnetischen Feldes der magnetischen Partikel von dem Druckmittel ein stärkeres Magnetfeld als von dem Substrat 2 erzeugt wird. Um dies zu erreichen, können die magnetischen Eigenschaften des Substrats 2 derart sein, dass das Substrat 2 im Wesentlichen nicht magnetisch und im Wesentlichen nicht magnetisierbar ist. Beispielsweise kann das Substrat 2 aus Aluminium sein.

Das Druckmittel kann Pigmente, die insbesondere die magnetisierbaren und/oder magnetischen Partikel aufweisen, und/oder einen Farbstoff aufweisen. Weiterhin kann das Druckmittel einen Füllgrad von 30 Vol-% bis 90 Vol-%, insbesondere von 40 Vol-% bis 70 Vol-%, an den magnetisierbaren und/oder magnetischen Partikeln aufweisen. Die magnetisierbaren Partikel können Pigmente, keramische Partikel und/oder Seltenerdmetalle aufweisen, die magnetischen Partikel können hartmagnetische Partikel, Pigmente, Mikromagneten, keramische Partikel und/oder Seltenerdmetalle aufweisen. Ein Mittelwert einer Verteilung von Größen der magnetisierbaren und/oder magnetischen Partikel kann kleiner als 2 µm sein. Sind die magnetisierbaren Partikel beispielsweise kugelförmig, so bezeichnet die Größe den Partikeldurchmesser. Weicht die Form der magnetisierbaren Partikel von der Kugelform ab, so ist die Größe die längste in dem magnetisierbaren Partikel vorkommende Abmessung.

Bei den Skalen der Figuren 1 bis 3 handelt es sich um linear geteilte Skalen. Dabei sind auch quadratisch geteilte oder logarithmisch geteilte Skalen denkbar. Ebenso sind Noniussysteme und Systeme mit variierenden Neigungswinkeln denkbar. Hingegen mit einem Barcode order einem QR-Code können die Positionen aufgrund der unregelmäßigen Struktur des Barcodes oder des QR-Codes nicht gekennzeichnet werden. Die Skala 3 gemäß Figur 1 weist eine Mehrzahl an Skalenstrichen 4 auf, die mittels des Druckmittels auf das Substrat 2 aufgebracht sind und die das Druckmittel aufweisende Bereiche sind. Alle Skalenstriche 4 haben dieselbe Länge l₁ und die gleiche Breite d₁. Die Breite des von dem Druckmittel freien Bereichs 5 zwischen zwei benachbart angeordneten Skalenstrichen 4 beträgt d₂ und ist ebenfalls für jedes Paar an benachbart angeordneten Skalenstrichen 4 gleich. Damit ist die Skala 3 linear geteilt. Das Inkrement z dieser Skala beträgt z=d₁+d₂.

Die Skala 3 gemäß Figur 2 weist eine Mehrzahl an Ziffern 7 auf, die mittels des Druckmittels auf das Substrat 2 aufgebracht sind und die das Druckmittel aufweisenden Bereiche sind. Die Ziffern 7 sind in aufsteigender Reihenfolge angeordnet. Zwischen zwei benachbart angeordneten Ziffern 7 ist jeweils ein von dem Druckmittel freier Bereich 5 angeordnet. Das Inkrement z dieser Skala ist für jeweils zwei benachbart angeordnete Ziffern gleich. Damit ist die Skala 3 linear geteilt. Das Inkrement z kann beispielsweise der Abstand der Schwerpunkte von zwei benachbart angeordneten Ziffern sein.

Die Skala 3 der erfindungsgemäßen Ausführungsform gemäß Figur 3 weist eine Mehrzahl an Skalenstrichen 4 auf, die mittels des Druckmittels auf das Substrat 2 aufgebracht sind und die das Druckmittel aufweisenden Bereiche sind. Bei dieser Ausführungsform haben alle Skalenstriche 4 dieselbe Breite d₁. Die Breite des von dem Druckmittel freien Bereichs 5 zwischen zwei benachbart angeordneten Skalenstrichen 4 beträgt d₂ und ist ebenfalls für jedes Paar an benachbart angeordneten Skalenstrichen 4 gleich. Damit ist die Skala 3 gemäß der erfindungsgemäßen Ausführungsform linear geteilt. Das Inkrement z dieser Skala beträgt z=d₁+d₂. Die Skala 3 gemäß der erfindungsgemäßen Ausführungsform weist Skalenstriche mit der Länge l₁, Skalenstriche mit der Länge l₂ und Skalenstriche mit der Länge l₃ auf, wobei l₃>l₂>l₁. Die Skala 3 ist derart geformt, dass jeder zehnte Skalenstrich 4 die Länge l₃ hat. Die Skala 3 weist in Längsrichtung jeweils einen Skalenstrich 4 der Länge l₃, vier Skalenstriche 4 der Länge l₁, einen Skalenstrich 4 der Länge l₂ und vier Skalenstriche 4 der Länge l₁ auf.

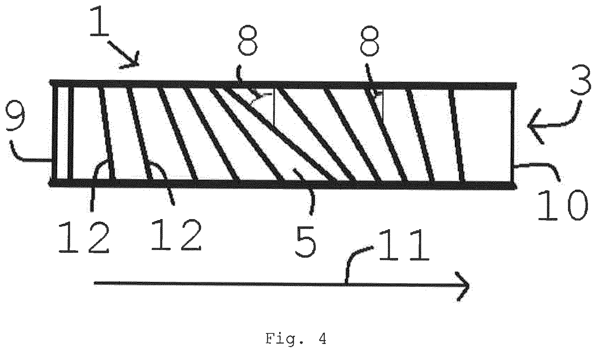

Die Skala 3 der Ausführungsform gemäß Figur 4 ist von einem Muster aus mit dem Druckmittel auf das Substrat 2 aufgebrachten Markierungsstreifen 12 gebildet, die von Markierungsstreifen 12 zu Markierungsstreifen 12 zwischen einer ersten Position 9 der Skala 3 und einer in die Längsrichtung 11 der Skala 3 im Abstand zur ersten Position 9 angeordneten zweiten Position 10 jeweils derart vorherbestimmt zur Transversalrichtung 11 der Skala 3 in einem jeweiligen Neigungswinkel 8 geneigt angeordnet sind, dass jeder der Neigungswinkel 8 einen Wert hat, der sich von den Werten der anderen Neigungswinkeln 8 unterscheidet. Die Längsrichtung und die Transversalrichtung 11 sind identisch.

Wird ein quadratisch geteilte Skala oder eine logarithmisch geteilte Skala eingesetzt, so ändert sich das Inkrement in Längsrichtung der Skala.

Der Gegenstand 1 gemäß der erfindungsgemäßen Ausführungsform kann wie folgt hergestellt werden: Bereitstellen eines Substrats 2; Aufbringen einer Skala 3 mit einem magnetisierbare und/oder magnetische Partikel aufweisenden Druckmittel auf das Substrat 2, wodurch der Gegenstand 1 fertig gestellt wird. Dabei kann das Druckmittel mittels Drucken auf das Substrat 2 aufgebracht werden, insbesondere mittels einem Offsetdruck, einem Laserdruck und/oder einem Tintenstrahldruck.

Es ist denkbar, dass das Verfahren den Schritt aufweist: Formen des Druckmittels bei dessen Aufbringen und/oder nach dessen Aufbringen auf das Substrat 2 derart, dass das Druckmittel in seinem mittleren Bereich eingedellt wird, so dass das Druckmittel an seinen Randbereichen sich erhebt, wodurch bei einem Übergang von den das Druckmittel aufweisenden Bereichen zu den von dem Druckmittel freien Bereichen 5 bei einem Anlegen eines äußeren Magnetfelds an den Gegenstand das von dem Druckmittel ausgehende Magnetfeld einen stärkeren Gradienten als vor dem Formen hat.

Die Position des Gegenstands 1 gemäß der erfindungsgemäßen Ausführungsform kann wie folgt ausgelesen werden: Anlegen eines äußeren Magnetfeldes an eine im Bereich der Skala 3 angeordneten Messstelle des Gegenstands 1 derart, dass die Skala 3 magnetisierbar ist; Detektieren, ob ein von der Messstelle ausgehendes Magnetfeld vorhanden ist; Rückschließen von dem detektierten oder nicht detektierten von der Messstelle ausgehenden Magnetfeld und/oder von der Form des von der Messstelle ausgehenden Magnetfeldes auf die Position des Gegenstands 1. Dabei kann das Magnetfeld unter Heranziehen des induktiven Effektes und/oder des magnetoresistiven Effekts detektiert wird, insbesondere des anisotropen magnetoresistiven Effekts, des Riesenmagnetowiderstand Effekts, des magnetischen Tunnelwiderstand Effekts und/oder des Hall-Effekts.

### Bezugszeichenliste

1 Gegenstand
2 Substrat
3 Skala
4 Skalenstrich
5 von dem Druckmittel freier Bereich
6 Beschriftung
7 Ziffer
8 Neigungswinkel
9 erste Position
10 zweite Position
11 Transversalrichtung
12 Markierungsstreifen
d₁ Breite der Skalenstriche
d₂ Breite des von dem Druckmittel freien Bereichs
z Inkrement
l₁ Länge des Skalenstrichs
l₂ Länge des Skalenstrichs
l₃ Länge des Skalenstrichs

## Patentansprüche

1. Gegenstand mit einem Substrat (2) und einer mit einem magnetisierbare und/oder magnetische Partikel aufweisenden Druckmittel auf das Substrat (2) aufgebrachten Skala (3), die das Druckmittel aufweisende Bereiche und von dem Druckmittel freie Bereiche (5), die zwischen den das Druckmittel aufweisenden Bereichen angeordnet sind, aufweist und eingerichtet ist, mittels der das Druckmittel aufweisenden Bereiche und der von dem Druckmittel freien Bereiche (5) Positionen zu kennzeichnen, wobei die magnetischen Eigenschaften des Substrats (2) derart sind, dass bei einem Anlegen eines äußeren Magnetfelds an den Gegenstand (1) oder beim Auslesen des magnetischen Feldes der magnetischen Partikel von dem Druckmittel ein stärkeres Magnetfeld als von dem Substrat (2) erzeugt wird, wobei die Skala (3) eine Mehrzahl an Skalenstrichen (4) aufweist, die unterschiedlich lang sind, wobei an vorbestimmten Positionen der Skala (3) Skalenstriche (4) mit einer vorbestimmten Länge (l₃) zusammen mit einer Beschriftung (6) jeweils Absolutpositionen der Skala (3) definieren und an anderen vorbestimmten Positionen Skalenstriche (4) mit einer anderen vorbestimmten Länge (l₁, l₂) jeweils Relativpositionen zwischen den Absolutpositionen definieren, wobei die Beschriftung mit dem Druckmittel auf das Substrat (2) aufgebracht ist.

2. Gegenstand gemäß Anspruch 1, wobei die magnetischen Eigenschaften des Substrats (2) derart sind, dass das Substrat (2) nicht magnetisch und nicht magnetisierbar ist.

3. Gegenstand gemäß Anspruch 1 oder 2, wobei mindestens einer der Skalenstriche (4) mit einer mit dem Druckmittel auf das Substrat (2) aufgebrachten Beschriftung (6) markiert ist.

4. Gegenstand gemäß einem der Ansprüche 1 bis 3, wobei die Skalenstriche eine Breite von 1 µm bis 1 mm haben.

5. Gegenstand gemäß einem der Ansprüche 1 bis 4, wobei das Druckmittel Pigmente aufweist, wobei die Pigmente magnetisierbare und/oder magnetische Partikel aufweisen und/oder einen Farbstoff aufweist.

6. Gegenstand gemäß einem der Ansprüche 1 bis 5, wobei das Druckmittel einen Füllgrad von 30 Vol-% bis 90 Vol-% an den magnetisierbaren und/oder magnetischen Partikeln aufweist.

7. Gegenstand gemäß einem der Ansprüche 1 bis 6, wobei die magnetisierbaren Partikel Pigmente, keramische Partikel und/oder Seltenerdmetalle aufweisen, die magnetischen Partikel hartmagnetische Partikel, Pigmente, Mikromagneten, keramische Partikel und/oder Seltenerdmetalle aufweisen.

8. Gegenstand gemäß einem der Ansprüche 1 bis 7, wobei ein Mittelwert einer Verteilung von Größen der magnetisierbaren und/oder magnetischen Partikel kleiner als 2 µm ist.

9. Verfahren zum Herstellen eines Gegenstands (1) gemäß einem der Ansprüche 1 bis 8, mit den Schritten:
- Bereitstellen eines Substrats (2);
- Aufbringen einer Skala (3) mit einem magnetisierbare und/oder magnetische Partikel aufweisenden Druckmittel auf das Substrat (2), wodurch der Gegenstand (1) fertig gestellt wird, wobei die Skala (3) das Druckmittel aufweisende Bereiche und von dem Druckmittel freie Bereiche (5) aufweist und eingerichtet ist, mittels der das Druckmittel aufweisenden Bereiche und der von dem Druckmittel freien Bereiche (5) Positionen zu kennzeichnen und die magnetischen Eigenschaften des Substrats (2) derart sind, dass bei einem Anlegen eines äußeren Magnetfelds an den Gegenstand (1) oder beim Auslesen des magnetischen Feldes der magnetischen Partikel von dem Druckmittel ein stärkeres Magnetfeld als von dem Substrat (2) erzeugt wird, wobei die Skala (3) eine Mehrzahl an Skalenstrichen (4) aufweist, die unterschiedlich lang sind, wobei an vorbestimmten Positionen der Skala (3) Skalenstriche (4) mit einer vorbestimmten Länge (l₃) zusammen mit einer Beschriftung (6) jeweils Absolutpositionen der Skala (3) definieren und an anderen vorbestimmten Positionen Skalenstriche (4) mit einer anderen vorbestimmten Länge (l₁, l₂) jeweils Relativpositionen zwischen den Absolutpositionen definieren , wobei die Beschriftung mit Druckmittel auf das Substrat (2) aufgebracht ist.

10. Verfahren gemäß Anspruch 9, mit dem Schritt:
- Magnetisieren der Skala (3) während und/oder nach ihrem Aufbringen.

11. Verfahren gemäß Anspruch 9 oder 10, wobei das Druckmittel mittels Drucken auf das Substrat (2) aufgebracht wird.

12. Verfahren zum Bestimmen einer Position eines Gegenstands gemäß Anspruch 1, wobei durch die auf dem Substrat (2) aufgebrachte Beschriftung Absolutposition zumindest des markierten Skalenstrichs bestimmt wird, mit den Schritten:
- Detektieren, ob ein von einer im Bereich der Skala (3) angeordneten Messstelle des Gegenstands (1) ausgehendes Magnetfeld vorhanden ist;
- Rückschließen von dem detektierten oder nicht detektierten von der Messstelle ausgehenden Magnetfeld und/oder von der Form des von der Messstelle ausgehenden Magnetfeldes auf die Position des Gegenstands (1) bezüglich der Messstelle.

13. Verfahren gemäß Anspruch 12 mit dem Schritt:
- Anlegen eines äußeren Magnetfelds an die Messstelle derart, dass die Skala magnetisiert ist.

14. Verfahren gemäß Anspruch 12 oder 13, wobei das von der Messstelle ausgehende Magnetfeld unter Heranziehen des induktiven Effektes und/oder des magnetoresistiven Effekts detektiert wird.

## Claims

1. Object with a substrate (2) and a scale (3) which is applied to the substrate (2) using a printing medium comprising magnetizable and/or magnetic particles, has regions comprising the printing medium and regions (5) free of the printing medium, which are arranged between the regions comprising the printing medium, and is designed to identify positions by means of the regions comprising the printing medium and the regions (5) free of the printing medium, wherein the magnetic properties of the substrate (2) are such that, when an external magnetic field is applied to the object (1) or when the magnetic field of the magnetic particles from the printing medium is read, a stronger magnetic field than that of the substrate (2) is generated, wherein the scale (3) has a plurality of scale graduations (4) of different lengths, wherein, at predetermined positions of the scale (3), scale graduations (4) of a predetermined length (l₃) together with an inscription (6) respectively define absolute positions of the scale (3) and, at other predetermined positions, scale graduations (4) of a different predetermined length (l₁, l₂) respectively define relative positions between the absolute positions, wherein the inscription is applied to the substrate (2) using the printing medium.

2. Object according to Claim 1, wherein the magnetic properties of the substrate (2) are such that the substrate (2) is not magnetic and not magnetizable.

3. Object according to Claim 1 or 2, wherein at least one of the scale graduations (4) is marked by an inscription (6) applied to the substrate (2) using the printing medium.

4. Object according to one of Claims 1 to 3, wherein the scale graduations have a width of 1 µm to 1 mm.

5. Object according to one of Claims 1 to 4, wherein the printing medium comprises pigments, wherein the pigments comprise magnetizable and/or magnetic particles, and/or comprises a dye.

6. Object according to one of Claims 1 to 5, wherein the printing medium has a filler content of magnetizable and/or magnetic particles of 30% by volume to 90% by volume.

7. Object according to one of Claims 1 to 6, wherein the magnetizable particles comprise pigments, ceramic particles and/or rare-earth metals, the magnetic particles comprise hard-magnetic particles, pigments, micro-magnets, ceramic particles and/or rare-earth metals.

8. Object according to one of Claims 1 to 7, wherein a mean value of a distribution of sizes of the magnetizable and/or magnetic particles is less than 2 µm.

9. Method for producing an object (1) according to one of Claims 1 to 8, with the steps of:
- providing a substrate (2);
- using a printing medium comprising magnetizable and/or magnetic particles to apply a scale (3) to the substrate (2), whereby the object (1) is completed, wherein the scale (3) has regions comprising printing medium and regions (5) free from the printing medium and is designed to identify positions by means of the regions comprising the printing medium and the regions (5) free of the printing medium, and the magnetic properties of the substrate (2) are such that, when an external magnetic field is applied to the object (1) or when the magnetic field of the magnetic particles from the printing medium is read, a stronger magnetic field than that of the substrate (2) is generated, wherein the scale (3) has a plurality of scale graduations (4) of different lengths, wherein, at predetermined positions of the scale (3), scale graduations (4) of a predetermined length (l₃) together with an inscription (6) respectively define absolute positions of the scale (3) and, at other predetermined positions, scale graduations (4) of a different predetermined length (l₁, l₂) respectively define relative positions between the absolute positions, wherein the inscription is applied to the substrate (2) using the printing medium.

10. Method according to Claim 9, with the step of:
- magnetizing the scale (3) during and/or after its application.

11. Method according to Claim 9 or 10, wherein the printing medium is applied to the substrate (2) by means of printing.

12. Method for determining a position of an object according to Claim 1, wherein the absolute position at least of the marked scale graduation is determined by the inscription applied to the substrate (2), with the steps of:
- detecting whether there is a magnetic field emanating from a measuring point of the object (1) arranged in the region of the scale (3);
- inferring from the detected or non-detected magnetic field emanating from the measuring point and/or from the form of the magnetic field emanating from the measuring point the position of the object (1) with respect to the measuring point.

13. Method according to Claim 12 with the step of:
- applying an external magnetic field to the measuring point in such a way that the scale is magnetized.

14. Method according to Claim 12 or 13, wherein the magnetic field emanating from the measuring point is detected by using the inductive effect and/or the magnetoresistive effect.

## Revendications

1. Objet comprenant un substrat (2) et une échelle (3) appliquée sur le substrat (2), l'échelle comprenant un moyen d'impression ayant des particules magnétisables et/ou magnétiques, laquelle échelle présente des zones ayant le moyen d'impression et des zones (5) sans le moyen d'impression, disposées entre les zones ayant le moyen d'impression, et elle est agencée pour marquer des positions au moyen de zones ayant un moyen d'impression et de zones (5) sans le moyen d'impression, les propriétés magnétiques du support (2) étant telles que, lorsqu'un champ magnétique externe est appliqué sur l'objet (1) ou lorsque le champ magnétique des particules magnétiques est lu, du moyen d'impression est généré un champ magnétique plus forte que du substrat (2), dans lequel l'échelle (3) présente une pluralité de marques d'échelle (4) de longueur différente, dans lequel, dans des positions prédéterminées de l'échelle (3), des marques d'échelle (4) de longueur prédéterminée (13) ainsi qu'une écriture (6) définissent des positions absolues respectives de l'échelle (3) et dans d'autres positions prédéterminées des marques d'échelle (4) de longueur prédéterminée différente (11, 12) définissent des positions relatives respectives entre les positions absolues, l'inscription étant appliquée sur le substrat (2) avec le moyen d'impression.

2. Objet selon la revendication 1, dans lequel les propriétés magnétiques du substrat (2) sont telles que le substrat (2) est non magnétique et non magnétisable.

3. Objet selon la revendication 1 ou 2, dans lequel au moins une des marques d'échelle (4) est marquée d'une écriture (6) appliquée sur le substrat (2) avec le moyen d'impression.

4. Objet selon l'une des revendications 1 à 3, dans lequel les marques d'échelle ont une longueur de 1 µm à 1 mm.

5. Objet selon l'une des revendications 1 à 4, dans lequel le moyen d'impression comprend des pigments, les pigments comprenant des particules magnétisables et/ou magnétiques, et/ou comprend un colorant.

6. Objet selon l'une des revendications 1 à 5, dans lequel le moyen d'impression a un taux de remplissage de 30% en volume à 90% en volume des particules magnétisables et/ou magnétiques.

7. Objet selon l'une des revendications 1 à 6, dans lequel les particules magnétisables comprennent des pigments, des particules céramiques et/ou des métaux des terres rares, les particules magnétiques comprennent des particules magnétiques dures, des pigments, des micro-aimants, des particules céramiques et/ou des métaux des terres rares.

8. Objet selon l'une des revendications 1 à 7, dans lequel une valeur moyenne d'une distribution de tailles des particules magnétisables et/ou magnétiques est inférieure à 2 µm.

9. Procédé pour produire un objet (1) selon l'une des revendications 1 à 8, comprenant les étapes de:
- fournir un substrat (2)
- appliquer une échelle (3) avec un moyen d'impression comprenant des particules magnétisables et/ou magnétiques sur le substrat (2), de telle sorte que l'objet (1) soit complété, dans lequel l'échelle (3) présente des zones ayant le moyen d'impression et des zones sans le moyen d'impression (5) et elle est agencée pour marquer des positions au moyen de zones ayant le moyen d'impression et de zones (5) sans le moyen d'impression et les propriétés magnétiques du substrat (2) sont telles que lorsqu'un champ magnétique externe est appliqué à l'objet (1) ou lorsque le champ magnétique des particules magnétiques est lu, du moyen d'impression est généré un champ magnétique plus forte que du substrat (2), l'échelle (3) présentant une pluralité de marques d'échelle (4) qui sont de longueur différente, dans lequel dans des positions prédéterminées de l'échelle (3), des marques d'échelle (4) d'une longueur prédéterminée (13) ainsi qu'une écriture (6) définissent des positions absolues respectives de l'échelle (3) et dans d'autres positions prédéterminées des marques d'échelle (4) de longueur prédéterminée différente (11, 12) définissent des positions relatives respectives entre les positions absolues, l'écriture étant appliquée sur le substrat (2) avec le moyen d'impression.

10. Procédé selon la revendication 9, comprenant l'étape de:
- magnétiser l'échelle (3) pendant et/ou après son application.

11. Procédé selon la revendication 9 ou 10, dans lequel le moyen d'impression est appliqué sur le substrat (2) par impression.

12. Procédé pour déterminer une position d'un objet selon la revendication 1, dans lequel par l'écriture appliquée sur le substrat (2) est déterminée la position absolue au moins de la ligne d'échelle marquée, avec les étapes de:
- détecter s'il existe un champ magnétique émis d'un point de mesure de l'objet (1) disposé dans la zone de l'échelle (3);
- déduire la position de l'objet (1) par rapport au point de mesure du champ magnétique détecté ou non détecté émis du point de mesure et/ou de la forme du champ magnétique émis du point de mesure.

13. Procédé selon la revendication 12, comprenant l'étape de:
- appliquer un champ magnétique externe au point de mesure de telle sorte que l'échelle soit magnétisée.

14. Procédé selon la revendication 12 ou 13, dans lequel le champ magnétique émis du point de mesure est détecté en utilisant l'effet inductif et/ou l'effet magnétorésistif.
